# EUROPÄISCHE PATENTSCHRIFT

(11) **EP 3 164 042 B1**
(45) Veröffentlichungstag und Bekanntmachung des Hinweises auf die Patenterteilung: **23.03.2022**
(21) Anmeldenummer: 15750642.9
(22) Anmeldetag: 01.07.2015
(51) Int. Cl.: A47K 13/26, F16B 11/00, F16B 35/04

(54) **VERFAHREN ZUR BEFESTIGUNG EINES WC-SITZES AN EINEM WC-KÖRPER SOWIE VORRICHTUNGEN ZUR DURCHFÜHRUNG DES VERFAHRENS**
METHOD FOR SECURING A TOILET SEAT TO A TOILET BODY, AND DEVICES FOR CARRYING OUT THE METHOD
PROCÉDÉ DE FIXATION D'UN SIÈGE DE WC SUR UN CORPS DE WC ET DISPOSITIFS POUR EFFECTUER LE PROCÉDÉ

(30) Priorität: 02.07.2014 DE 102014109277
(43) Veröffentlichungstag der Anmeldung: 10.05.2017
(73) Patentinhaber: TECE GmbH, 48282 Emsdetten (DE)
(72) Erfinder: KRABBE, Martin, 48341 Altenberge (DE)
(74) Vertreter: Lippert Stachow Patentanwälte Rechtsanwälte
(86) Internationale Anmeldenummer: PCT/EP2015/065016
(87) Internationale Veröffentlichungsnummer: WO 2016/001318

(56) Entgegenhaltungen:
- WO-A1-2006/084458
- DE-A1-102005 004 485
- DE-U1- 8 703 919
- GB-A- 2 224 046

## Beschreibung

Die Erfindung betrifft ein Verfahren zur Befestigung eines WC-Sitzes an einem WC-Körper, und eine nach dem Verfahren hergestellte, WC-Körper und Toilettensitzfixierelement aufweisende Einheit

### Stand der Technik

WC-Sitze werden auf der Oberseite eines WC-Körpers befestigt, der eine obere Ebene mit einer WC-Öffnung und einen sich nach unten an die WC-Öffnung anschließenden Spülraum definiert. Der WC-Sitz wird üblicherweise am hinteren Ende über zwei zueinander beabstandete Toilettensitzfixierelemente mit dem WC-Körper verschraubt, vorzugsweise mittels zweier Scharniere, die über Befestigungsbolzen in Befestigungsöffnung in den WC-Körper eingreifen. Der WC-Sitz umfasst üblicherweise einen schwenkbaren Sitzring sowie einen getrennt davon schwenkbaren Deckel, welche beide aus einer angehobenen Öffnungsstellung in eine abgesenkte Schließ- bzw. Sitzstellung bei weiterhin angehobenem Deckel verschwenkt werden können zur wahlweisen Öffnung und zum Verschließen der WC-Öffnung bzw. des WC-Körpers, häufig einfach auch "WC" oder "Keramik" genannt.

### Nachteile am Stand der Technik

Ein weit verbreitetes jedem bekanntes alltägliches Ärgernis sind wackelige WC-Sitze. Selbst Sitze, welche kurz nach der Installation noch ausreichend fest montiert sind, lösen sich nach längerer Benutzung und wackeln. Die auf den WC-Sitz wirkenden Belastungen sind enorm. Aufgrund Bewegungen eines Nutzers auf dem Sitzring und aufgrund der dynamischen Belastung beim Hinsetzen und Aufstehen, treten Belastungen auf, welche in unterschiedliche Richtungen auf die WC - Sitzbefestigung einwirken. Hinzu kommen Belastungen durch eigentlich nicht vorgesehene Benutzungen. So gibt es z.B. Nutzer, die sich bei der Benutzung einer öffentlichen Toilette mit den Füßen auf die Toilettenbrille stellen, um einen Kontakt zwischen der Toilette und den Beinen zu vermeiden. Das eigentlich als Sitztoilette konzipierte WC wird somit als Hock-WC missbraucht. Gerade beim Aufsteigen und Absteigen treten im Abhängigkeit vom Gewicht des Nutzers extreme Scher- und Hebelkräfte auf, welche durch die heutigen WC - Befestigungen nicht aufgenommen werden können.

Extrembelastungen führen zur Lockerung der Befestigungsschrauben oder zur Aufweitung von Hülsen oder nur zum Verschieben der Befestigungen auf der Keramik bzw. dem WC-Körper.

Im Stand der Technik wird der WC-Sitz auf der WC-Keramik in senkrechten Befestigungslöchern befestigt. Diese Befestigungslöcher werden schon vor dem Brennen der Keramik in das noch weiche Keramikmaterial eingestochen oder über Silikonstopfen in der Form vor- bzw. angeformt. Die Keramik wird dann getrocknet und bei ca. 1200°C gebrannt. Hierbei kann diese um ca. 10 bis 14 % schrumpfen. Aufgrund des großen Schrumpfens und des Brennprozesses, bei dem die Keramik zwischenzeitlich sehr weich und instabil wird, müssen relativ hohe Toleranzen bei der Befestigung des WC - Sitzes auf der später ausgehärteten Keramik ausgeglichen werden. Hier gibt es zwei Ansätze zum Ausgleich der Toleranzen:
Entweder werden Toilettensitzfixierelemente auf der Baustelle verwendet, welche eine exzentrische Anordnung zwischen Befestigungsschraube und Stehbolzen zur Sitzbefestigung aufweisen. Durch Drehen der exzentrischen Anordnung kann der Sitz passgenau zur Keramik ausgerichtet werden. Anschließend wird die Befestigungsschraube über eine Dübeltechnik oder eine Mutter mit der Keramik verschraubt.

### Alternativ werden auf der Baustelle

Toilettensitzfixierelemente verwendet, die an der nach oben gerichteten Seite einen Stehbolzen zur Sitzbefestigung bilden und an der nach unten zeigenden Seite ein Gewinde besitzen. Der Toleranzausgleich zur Ausrichtung des WC-Sitzes erfolgt über einen Ringspalt zwischen Befestigungsbolzen und Innenwand der Befestigungsöffnung in der Keramik. Diese einstückigen Bolzen sind aufgrund des fehlenden Hebelarms zwischen Befestigungsbolzen und Stehbolzen generell stabiler als exzentrische Befestigungen.

In der EP 2394552 ist eine Sitzbefestigung beschrieben, welche mit einer Dübeltechnik von oben in die Befestigungslöcher eingesetzt wird. Der Dübel zentriert sich beim Befestigen mittig im Befestigungsloch der Keramik. Um einen Toleranzausgleich bei der Positionierung des WC Sitzes zu erzielen, ist der Bolzen zum WC-Sitz versetzt zum Dübel angeordnet. Dieser Versatz und das Dübelmaterial aus einem flexiblen Kunststoff führen in der Praxis dazu, dass sich die Sitzbefestigung während der Nutzung lockert.

Die EP 156967 A1 beschreibt eine Befestigung des WC -Sitzes, welche ebenfalls den Toleranzausgleich und die damit verbundene Positionierung des WC-Deckels über exzentrisch angeordnete Bolzen erreicht.

In der JP 2000296075 A wird eine Technik beschrieben, bei der die Befestigung des WC Sitzes über eine elastische oder klebende Unterlegscheibe unter einem Schraubenkopf gelöst werden soll. Aus ästhetischen Gründen ist aber ein großer Schraubenkopf häufig ungewünscht. Zudem besteht bei elastischem Material die Gefahr, dass dieses unter ständiger Spannung seine Elastizität verliert und dann nicht mehr in der Lage ist, die Befestigung gegen ein Verrutschen zu sichern.

In der JP 2001238821 A wird eine Technik beschrieben, welche über ein elastisches Federelement versucht, die Befestigungsschraube und die zugehörige Mutter gegen Lockern zu sichern und damit ein Wackeln zu vermeiden.

Die EP 1177756 A2 beschreibt einen Klappdübel, welcher von oben in die Befestigungslöcher der Keramik eingesetzt wird. Durch die Ringnut zwischen Befestigungsschraube und Keramik können Toleranzen selbst bei einem zentrisch angeordneten Stehbolzen ausgeglichen werden. Es wird aber auch eine exzentrische und dadurch instabilere Version beschrieben. Das generelle Problem ist allerdings auch hier die federnde Elastizität des Klappdübels. Da dieser durch das relativ kleine Loch der Keramik geführt werden muss, kann dieser nicht ausreichend stabil ausgeführt werden, um die extremen Kräfte aufzunehmen, die bei der Benutzung entstehen können. In WO 2006/084458 A1 ist eine Befestigungsvorrichtung zur Befestigung einer WC-Sitzgarnitur offenbart, die einen zylinderförmigen Befestigungsadapter aufweist, welcher mit einem Befestigungsabschnitt in eine Aufnahmebohrung des WC-Körpers eintaucht. Der Befestigungsabschnitt weist zwei axial beabstandete Führungsabschnitte auf, mit ihren Außenumfangsflächen an einer Innenumfangswandung der Aufnahmebohrung anliegen. Ein zwischen den beiden Führungsabschnitten befindlicher Abschnitt weist einen geringeren Durchmesser auf, so dass ein Kleberaum entsteht, in welchen ein Klebstoff eingebracht wird, um den Befestigungsabschnitt und damit den Befestigungsadapter in der Aufnahmebohrung des WC-Körpers zu fixieren.

In DE 10 2005 004 485 A1 ist die Befestigung einer Bauteilplatte an einer Befestigungsfläche eines Grundkörpers mittels Befestigungsschrauben und insbesondere mittels Stellschrauben beschrieben, wobei ein Spalt zwischen der Bauteilplatte und der Befestigungsfläche mit einem aushärtenden Füllmaterial verfüllt wird. Dabei ist die Befestigungs- und/oder Stellschraube mit wenigstens einem Kanal versehen, durch welchen das Füllmaterial in den Spalt injiziert wird.

Bei der Entwicklung der Erfindung mussten zunächst die Gründe des Lösens von Toilettensitzen genauer erforscht werden. Das wesentliche Problem liegt demnach in der generellen Aufteilung der Montage zu sehen. Die relativ großen Lagetoleranzen zwischen Befestigungslöchern und Außenkontur der Keramik müssen bei der Montage des WC-Sitzes durch den Installateur ausgeglichen werden. Wie gut dieses gelingt, ist nicht nur von der verwendeten Technik, sondern auch maßgeblich von der Sorgfalt und der Fachkenntnis des ausführenden Installateurs abhängig. Beim Anziehen der Befestigungsschrauben muss der WC-Sitz sehr gerade gehalten werden. Das Ausrichten es WC- bzw. Toilettensitzes im Verhältnis zur Kontur der Keramik und das gleichzeitige Ausrichten der beiden Toilettensitzfixierelemente erfordert besonders bei exzentrischen Befestigungsbeschlägen ein großes Geschick des Installateurs. Drei Elemente auszurichten, zu fixieren und gleichzeitig zwei Schrauben anzuziehen stellt eine besondere Herausforderung dar.

Ein häufiger Grund besteht in der Verwendung von exzentrischen Befestigungsbeschlägen. Die Verbindung zwischen dem nach oben ragenden Stehbolzen und dem nach unten ragenden Befestigungsbolzen kann meist nur unzureichend fest ausgeführt werden, da die gesamte Befestigung aus Designgründen nicht zu groß werden soll. Durch den Hebelarm wirken bei der Benutzung Rotationskräfte auf den Befestigungsbolzen. Diese können dann zum Lösen der Befestigungsschraube oder Befestigungsmutter führen.

Bei Steh- bzw. Befestigungsbolzen, welche aus einem Stück bestehen, werden häufig federnde Unterlegscheiben aus Metall oder rutschhemmende Unterlegscheiben aus Kunststoff verwendet. Anfänglich hemmen diese das Wackeln eines WC-Sitzes recht gut, doch mit der Zeit baut sich durch die Spannung der Schraubverbindung zwischen Befestigungsbolzen, Keramik und Befestigungsmutter die Spannung in dem Federelement ab. Besonders bei Unterlegscheiben aus Kunststoff oder Gummi kommt die Eigenschaft des Kriechens oder Fließens der Werkstoffe noch verschärfend hinzu. Die Spannung der Schraubverbindung reicht nach einiger Zeit nicht mehr, um den Sitz sicher zu halten. Löst sich jetzt noch die Befestigungsmutter, so ist der Sitz komplett locker. Häufig werden zum Schutz der Keramikoberflächen des WCs unter Metallteilen Unterlegscheiben aus Kunststoff eingesetzt, die dieses Problem des Fließens verstärken.

Selbst wenn eine solche Befestigung ideal konstruiert wäre, müsste der Installateur diese eigentlich mit einem Drehmomentschlüssel anziehen, um eine exakt ausgelegte Spannung auf die Verbindung zu bringen. Dieses entspricht nicht den gegebenen Möglichkeiten auf der Baustelle.

### Aufgabe

Ausgehend von dem eingangs genannten Stand der Technik und den damit verbundenen Nachteilen stellt sich die Erfindung die Aufgabe, diese Nachteile zumindest teilweise zu vermeiden und insbesondere ein Verfahren und eine Einheit zum dauerhaften, positionsfesten Befestigen des WC-Sitzes an dem WC-Körper bereitzustellen.

### Erfindung

Diese Aufgabe wird bereits durch ein Verfahren mit den folgenden Verfahrensschritten gelöst:
- Ausrichten einer Positionierhilfe im Verhältnis zu dem WC-Körper zur Realisierung eines gleichmäßigen Abstands;
- Ausrichten von mindestens einem Toilettensitzfixierelement in mindestens einer Befestigungsöffnung des WC-Körpers anhand der Positionierhilfe, wobei das Toilettensitzfixierelement (8, 10) mit einem ersten Abschnitt in die Befestigungsöffnung eingesetzt wird und über seine Erstreckung hinweg, mit der es sich in der Befestigungsöffnung erstreckt, einen Außendurchmesser aufweist, der kleiner ist als die Befestigungsöffnung zum Ermöglichen eines Ausgleichs von sich bei der Herstellung des WC-Körpers ergebenden Toleranzen durch das Ausrichten des Toilettensitzfixierelements (8, 10) in der Befestigungsöffnung anhand der Positionierhilfe;
- Vorfixieren des mindestens einen Toilettensitzfixierelements mit einem Befestigungsmittel in einer Sollposition; und
- positionsgenaues und unverrückbares Endfixieren des Toilettensitzfixierelements durch Verfüllen des noch zwischen dem Toilettensitzfixierelement und der Befestigungsöffnung bestehenden Freiraums mit einem dauerhaft aushärtendem Spaltfüller.

Der Kern der Erfindung liegt folglich darin, dass das Toilettensitzfixierelement mit der Positionierhilfe werksseitig zunächst angepasst an die konkrete Geometrie und Abmessung des WC-Körpers positionsgenau für den erst später auf der Baustelle anzubringenden WC-Sitz in der Befestigungsöffnung auszurichten, in dieser Sollposition vorzufixieren und schließlich durch Einbringen eines aushärtenden Füllmaterials endzufixieren, so dass nach dem Aushärten des Spaltfüllers eine Relativbewegung des Toilettensitfixierelements völlig ausgeschlossen ist. Die Sollposition ist also der optimale Ort für das Toilettensitzfixierelement in der Befestigungsöffnung für den jeweiligen WC-Körper und angepasst an den zu verwenden WC-Sitz, an dem in Einbaulage geringste Kräfte auf diesen wirken. Dabei kann beispielsweise zunächst das Toilettensitzfixierelement mit einem ersten Abschnitt in die Befestigungsöffnung eingesetzt werden, so dass dieser erste Abschnitt von dem WC-Körper umgeben ist, wobei ein zweiter Abschnitt außerhalb des WC-Körpers sein kann, wonach dann das Toilettensitzfixierelement abschnittsweise in der Befestigungsöffnung gehalten und mit dem Befestigungsmittel relativ zu dem WC-Körper in der Sollposition vorfixiert werden kann. Beispielsweise können die beiden Abschnitte als einstückiges Element des Toilettensitzfixierungselement ausgebildet sein.

Das Toilettensitzfixierungselement kann mehrteilig ausgebildet sein, wobei beispielsweise der erste Abschnitt von einem ersten Bestandteil und der zweite Abschnitt von einem zweiten Bestandteil gebildet ist. Dabei kann die Ausrichtung und/oder Vorfixierung und/oder Endfixierung des Toilettensitzfixierelements sich ausschließlich auf den ersten Abschnitt oder ein den ersten Abschnitt umfassendes Bestandteil beziehen. Beispielsweise kann durch das Ausrichten mittels der Positionierhilfe die Position, beispielsweise die des Schwerpunkts, des Toilettensitzfixierelements in zwei Dimensionen relativ zu dem WC-Körper festgelegt sein, während das Toilettensitzfixierelement beispielsweise in der dritten Dimension verschiebbar sein kann und/oder rotierbar sein kann, beispielsweise zum Vorfixieren des Toilettensitzfixierelements.

Die Positionierungshilfe kann unterschiedlich ausgebildet sein. Für eine hochautomatisierte Fertigung kann diese z.B. als Roboter ausgebildet sein, der sich über eine Optik, Kamera oder dergleichen auf die genaue Geometrie des WC-Körpers einmisst und das Toilettensitzfixierelement in der Sollposition anordnet und in dieser vorfixiert. Sodann wird zur Endfixierung der Spaltfüller in den noch vorhandenen Zwischenraum zwischen der Befestigungsöffnung und dem Toilettensitzfixierelement eingefüllt.

Eine weniger automatisierte Variante des erfindungsgemäßen Montageverfahrens sieht die Ausbildung der Positionierhilfe als ein Sitzkonturelement vor, welches Positioniermittel zur positionsgenauen Ausrichtung und Anordnung von mindestens einer Positionieröffnung in der Sollposition für das mindestens eine Toilettensitzfixierelement umfasst. Dieses Sitzkonturelement hat die Funktion einer Schablone, welche durch die Positioniermittel an der Kontur des WC-Körpers ausrichtbar ist zum Ausrichten und Vorfixieren des mindestens einen Toilettensitzfixierelements in der Sollposition in dem Befestigungsloch.

Das Sitzkonturelement kann z.B. als ein schalenförmiger Aufsatz ausgebildet sein, welcher oberseitig auf die obere Sitzfläche mit der Eingangsöffnung für den Spülraum des WC-Körpers aufsetzbar ist. Die Positioniermittel für die Ausrichtung in der Sollposition umfassen dabei beispielsweise einen umlaufenden oder auch nur abschnittsweise bzw. mit Fingern ausgebildeten Rand, damit die in dem Sitzkonturelement vorgesehene Positionieröffnung für das Toilettensitzfixierelement in der genauen Sollposition angeordnet und in dieser das Toilettensitzfixierelement vorfixerbar ist.

Bei einer bevorzugten Ausführungsform ist das Sitzkonturelement als an die Geometrie des WC-Körpers angepasste, auf eine Sitzfläche des WC-Körpers aufsetzbare Schale mit einem umlaufendem, die Sitzfläche in Einbaulage umgreifenden Positionierrand ausgebildet, welche bevorzugt als einstückiges Teil, besonders bevorzugt als Kunststoffspritzgussteil ausgebildet ist.

Das Sitzkonturelement bzw. die Positionierhilfe wird insofern erst nach dem Brennen der Keramik im Verhältnis zu dieser ausgerichtet und bildet zumindest die Abmessungen und gewünschte Lage des WC-Sitzes ab, wie dieser später in der Sollposition in Einbaulage auf der Baustelle montiert werden soll. Das Sitzkonturelement wird zur Außenkontur des WC-Körpers ausgerichtet zur Erzielung eines gleichmäßigen, vorzugsweise beidseitigen Abstands zwischen Sitzkonturelement und Außenkontur bzw. dem Außenrand des WC-Körpers. Sodann wird das mindestens eine Toilettensitzfixierelement anhand der Positionslöcher in dem Sitzkonturelement ausgerichtet. Toleranzen werden hierbei durch das Übermaß der Befestigungsöffnung ausgeglichen, also durch die Tatsache, dass die Befestigungsöffnung größer ist als der Außendurchmesser des Toilettensitzfixierelements. Hierfür ist ein Übermaß von 2 - 5 mm ausreichend. Die Toilettensitzfixierelemente werden danach vorfixiert.

Schließich wird der Hohlraum bzw. Ringspalt zwischen dem Toilettensitzfixierelement und der Befestigungsöffnung der Keramik mit einem aushärtenden Spaltfüller verfüllt, welches das Toilettensitzfixierelement somit dauerhaft und unbeweglich in der Sollposition angepasst an den WC-Sitz fixiert. Nach dem Aushärten des Spaltfüllers ist eine Relativbewegung des Toilettensitzfixierelements im Verhältnis zum WC-Körper selbst bei extremer Belastung unmöglich.

Für den Fachmann ist verständlich, dass die Verfahrensschritte in der Reihenfolge austauschbar sind, also auch zunächst das Toilettensitzfixierelement in die Befestigungsöffnung des WC-Körpers eingesetzt werden kann und sodann dessen Ausrichtung in die Sollposition, vorzugsweise mit dem Sitzkonturelement auf dem WC-Körper zur Vorfixierung erfolgen kann. Bei einer weiteren Alternative erfolgt zunächst das Einbringen des Spaltfüllers in die Befestigungsöffnung, z. B. unter Verwendung einer Hilfsvorrichtung zum Halten des Spal.tfüllers, sodann wird in diesen noch flüssigen oder zähnen Spaltfüller das Toilettensitzfixierelement eingebacht und u.U. unter Verwendung des Sitzkonturelements, mit Hilfe des Befestigungsmittels in der Sollposition vorfixiert, so dass der Spaltfüller dann zur Endfixierung aushärtet.

Das Vorfixieren erfolgt vorzugsweise mit einer Mutter oder einem Bolzen und einer Unterlegscheibe, die von der Unterseite des WC-Körpers her mit dem Befestigungselement verbunden werden, kann aber auch durch eine Klemme oder ein anderes geeignetes Befestigungsmittel erfolgen. Allgemein erfolgt das Vorfixieren des Toilettensitzfixierelements relativ zu dem WC-Körper dergestalt, dass das Toilettensitzfixierelement durch das Befestigungsmittel an dem WC-Körper lösbar fixiert wird, d.h. dass das Toilettensitzfixierelement durch Lösen des Befestigungsmittels zerstörungsfrei von dem WC-Körper gelöst werden kann.

Die Endfixierung erfolgt durch Einbringen des Spaltfüllers in die Befüllungsöffnung, z.B. durch Ansetzen eins Werkzeug an das Toilettensitzfixierelement und Einbringen des Spaltfüllers mittels des Werkzeugs in die Befüllungsöffnung. Die Befüllungsöffnung dient zum Befüllen des gesamten Zwischenraums zwischen der Innenseite der Befestigungsöffnung und dem vorfixierten Toilettensitzfixierelement, insbesondere dem Befestigungselement in Einbaulage zur Realisierung von dessen positionsfester und unverrückbarer Endfixierung , also des gesamten Spalts bzw. Ringspalts in einem evtl. existierenden Zwischenraum. Durch diese Befüllungsöffnung, die z.B. als Loch in dem Auflager oder einer als Fixierungshilfsmittel verwendeten Unterlegscheibe ausgebildet sein kann, kann der Spaltfüller in den Zwischenraum eingebracht, z.B. eingespritzt werden. Die Befüllungsöffnung kann aber auch Bestandteil eines längeren Befüllungskanals sein, der sich durch ein oder mehrere Bestandteile des Toilettensitzfixierungselements erstreckt, z.B. durch einen Standbolzen, das Auflager, das Befestigungselement und deren Bestandteile bzw. eingesetzt Fixerungshilfsmittel, also z.B. einen Bolzen, eine Mutter oder eine Unterlegscheibe.

Es ist aber auch möglich, dass Auflager Höhenverstellbar und lagefixierbar an einem Gewindestift auszubilden, so dass das Auflager nach dem Vorfixieren entlang eines Axialteils, z.B. eines Standbolzens, aus einer auf dem Rand der WC-Keramik am Befestigungsloch aufliegenden Montageposition in eine angehobene Füllposition anhebbar ist. Nach dem Befüllen des Zwischenraums mit dem Spaltfüller kann das Auflager sodann wieder abgesenkt und lagefixiert werden, z.B. mit einem oberseitig auf dem Axialteil in einer Nutz sitzenden Sprengring.

Der Spaltfüller wird vorzugsweise in nieder- bis hochviskoser Form über die Befüllungsöffnung in den noch bestehenden Hohl- oder Ringraum zwischen der Befestigungsöffnung und dem Toilettensitzfixierelement eingebracht, damit dieser gut aushärtet bis zur endgültigen Verwendung der Toilette. Dabei werden die großen Toleranzen der Keramik über die Positionierung der Bolzen mit Hilfe der Schablone ausgeglichen. Sitzbeschläge und einzementierte Standbolzen müssen lediglich die viel engeren Toleranzen ausgleichen, welche bei der Metallfertigung auftreten. Ein Wackeln des WC Sitzes wird hierdurch dauerhaft verhindert.

Als Spaltfüller werden vorzugsweise dauerhaft aushärtende Materialien eingesetzt, wie z.B. abbindende 1- oder mehrkomponentige Harze, vorzugsweise 2-Kompenenten Reaktionsharze, anorganische mineralische Bindemittel, z.B. auf Zementbasis, hydratisierende Silikate usw., gebundene Materialien, oder andere geeignete fugenfüllende polymere Klebstoffen, die besonders bevorzugt unter Umgebungsluft aushärten. Durch diesen Spaltfüller wird eine mechanische Fixierung und evtl. zusätzliche noch eine stoffliche Fixierung des Befestigungselements in der Sollposition realisiert, und zwar vorzugsweise mit Bolzen und Mutter und weiter evtl. notwendigen Befestigungsmitteln. Das Aushärten des Spaltfüllers verlangsamt nicht die Produktion der WC - Keramik. Selbst wenn das Aushärten mehrere Stunden dauern sollte, ist dies unproblematisch, weil das Befestigungselement erst nach der bauseitigen Montage des WC-Sitzes extremen Belastungen ausgesetzt wird; zu diesem Zeitpunkt ist der Spaltfüller aber vollständig ausgehärtet.

Dem Spaltfüller bzw. den Harzen können auch Zusatzstoffe zur Verbesserung der Stabilität und insbesondere der Zähigkeit beigemischt werden, z.B. in Form von Glasfaserfilamenten, also Glasfaserfäden oder Stücken. Auch das Einwickeln des Befestigungselements in Füllmaterial, sich mit dem verwendeten Spaltfüller gut verbindenden Glasfaserelementen oder dergleichen ist möglich.

Vorzugsweise ist das ausgehärtete Füllmaterial nicht elastisch, obwohl auch geringfügig elastische Materialien für einige Einsatzgebiete zweckmäßig sein können.

Um den fugenfüllenden Spaltfüller einzubringen, wird zur Lösung der eingangs genannten Aufgabe ein erfindungsgemäß ausgebildetes Toilettensitzfixierelement vorgeschlagen, welches eine Befüllungsöffnung für das Einfüllen des Spaltfüllers aufweist. Diese Befüllungsöffnung kann als kleine Öffnung zum Einspritzen des Spaltfüllers ausgebildet sein, z.B. in dem Auflager oder einer als Hilfsfixierungsmittel verwendeten Unterlegscheibe, oder auch Bestandteil eines längeren Befüllungskanals sein, der z.B. als eine zentrale Bohrung , als eine seitliche Nut oder eine Bohrung in einer als Befestigungsmittel verwendeten Schraube ausgebildet sein kann. Der Befüllungskanal erstreckt sich in Einbaulage zumindest mit einer Komponente in der Einbaurichtung von oben nach unten. Die Befüllungsöffnung kann in dem Befüllungskanal an einem ersten Abschnitt entlang dieser Einbaurichtung angeordnet sein, wobei an einem zweiten Abschnitt entlang dieser Einbaurichtung, der in dieser Richtung von dem ersten Abschnitt beabstandet ist, eine Austrittsöffnung in dem Befüllungskanal vorgesehen sein kann. Insbesondere können die Befüllungsöffnung am oberen Ende und die Austrittsöffnung am unteren Ende des Befüllungskanals angeordnet sein.

Der Spaltfüller wird vorzugsweise in nieder- bis hochviskoser Form eingebracht und kann dann bis zur endgültigen Verwendung der Toilette aushärten.

Die großen Toleranzen der Keramik werden über die Positionierung des Toilettensitzfixierelements in der Sollposition mit Hilfe des Sitzkonturelements ausgeglichen. Die Sitzbeschläge und einzementierte Standbolzen des Toilettensitzfixierelements müssen lediglich die viel engeren Toleranzen ausgleichen, welche bei der Metallfertigung auftreten können. Ein Wackeln des WC-Sitzes wird hierdurch dauerhaft verhindert. Aufgrund des Verklebens und/oder Einzementierens können sich die Toilettensitzfixierelemente weder verschieben noch drehen und sind insofern positionsgenau und dauerhaft in der an die Sitzkontur angepassten Sollposition fixiert. Insofern kann auch eine zur Fixierung eingesetzte Mutter nicht mehr durch Torsionsbewegungen des Toilettensitzfixierelements gelockert werden. Nach dem Aushärten des Spaltfüllers kann das Toilettensitzfixierelement sich selbst bei extremer Belastung nicht mehr in der Befestigungsöffnung bewegen und ist insofern positionsgenau, permanent ortsfest ist der Sollposition fixiert. Nach der Endfixierung und Aushärtung des Spaltfüllers werden somit auf das Toilettensitzfixierelement in Einbaulage wirkende auftretende Belastungen (Zug und/oder Scherung und/oder Torsion) wesentlich auch von dem Füllmaterial aufgenommen.

In einer besonders stabilen Ausführungsform ist das Toilettensitzfixierelement als einteiliger Befestigungsbolzen ausgebildet, der besonders bevorzugt aus Stahl oder einem anderen zähen und widerstandfähigen Material besteht.

Eine andere Ausführungsform sieht eine mehrteilige Ausgestaltung des Toilettensitzfixierelements vor, z.B. in Form einer in die Befestigungsöffnung einsetzbaren Befestigungsbuchse, die von unten mit einem Fixiermittel Vorfixiert wird, sowie einem von oben in die Befestigungsbuchse einsetzbaren, z.B. einschraubbaren Standbolzen. Auch bei dieser Ausbildung sind vorzugsweise zwischen der Befestigungsbuchse und dem Standbolzen Mittel zur Vermeidung einer Relativbewegung (vorzugsweise Drehverhinderungsmittel) vorgesehen.

Das Toilettensitzfixierelement ist vorzugsweise zumindest abschnittsweise an dem in die Befestigungsöffnung einsetzbaren Befestigungsende drehgesichert ausgebildet zur Realisierung eines Formschlusses mit dem Spaltfüller, z. B. abschnittsweise eckig oder kantig geformt.

In der besonders stabilen Ausführungsform ist das Auflager des Toilettensitzfixierelements abdeckend ausgebildet, also ausgebildet zum vollständigen Abdecken der Befestigungsöffnung in Einbaulage, vorzugsweise in jeder Anordnung in der Befestigungsöffnung, also auch bei Anlage an einer Seite der Befestigungsöffnung. Dieses Auflager ist vorzugsweise ausgebildet als umlaufender, radial über den Nenndurchmesser hinausragender Auflageflansch oder Auflagebund. Der maximale Durchmesser des Auflagers beträgt mindestens den Durchmesser der Befestigungsöffnung abzüglich des Durchmessers des Toilettensitzfixierelements am in die Befestigungsöffnung eingesetzten Befestigungsende, vorzugsweise zzgl. einer Sicherheitsmarge von 10 bis 20%. Zur Vermeidung eines Austritts des Spaltfüllers bei dem Einbringen des Spaltfüller ist das Auflager bevorzugt dichtend ausgebildet bzw. umfasst Dichtmittel an der in Einbaulage unteren Auflageseite, z.B. in Form von mindestens einem O-Ring.

In der bevorzugten Ausführungsform ist das Toilettensitzfixierungselement als im Wesentlichen stiftförmiger bzw. zylindrischer Befestigungsbolzen ausgebildet, der ein- oder mehrteilig ausgebildet sein kann und vorzugsweise am oberen Ende einen Standbolzen zur Befestigung des WC-Sitzes, im mittleren Abschnitt das Auflager und am unteren Ende einen Befestigungsabschnitt zur Befestigung an der Befestigungsöffnung aufweist.

Die Erfindung schlägt somit ein einfaches Montageverfahren zur reproduzierbaren Montage eines WC-Sitzes auf einer WC-Keramik unter industriellen Bedingungen im Keramikwerk vor, welches die aufgrund des unterschiedlichen Schrumpfprozesses der Keramik beim Aushärten mit stets variierenden Toleranzen auftretenden Schnittstelle zwischen WC-Körper und Toilettensitzfixierelement vermeidet. Im Ergebnis entsteht somit eine Schnittstelle mit geringen Toleranzen zwischen dem Toilettensitzfixierelement und dem WC-Sitz. Somit muss der Installateur bei der Endmontage des WC-Sitzes lediglich aufeinander abgestimmte Bauteile verbinden und das Ausrichten des WC-Sitzes im Verhältnis zum WC-Körper entfällt komplett. Insofern kann die Montage auch durch ungeschultes Personal durchgeführt werden.

Durch die mechanische Fixierung mit Bolzen und Mutter verlangsamt der Aushärtungsprozess der Einzementierung oder Verklebung des Toilettensitzfixierelements nicht die Produktion der WC-Keramik. Auch wenn das Aushärten mehrere Stunden dauern sollte, ist dieses unproblematisch, weil das Toilettensitzfixierelement erst nach der bauseitigen Montage des WC-Sitzes den extremen Belastungen ausgesetzt wird.

Ein weiterer wesentlicher Vorteil der Erfindung ist darin zu sehen, dass nur noch harmonierende Materialien miteinander in Einbaulage in Wirkverbindung treten, nämlich der Metallbeschlag auf Metallbolzen und nicht mehr Metall mit der Keramik des WC-Körpers, was immer zu ungewünschten Beschädigungen der Oberfläche des WC-Körpers führen kann und diesen unansehnlich macht.

Vorzugsweise werden mehrere insbesondere zwei erfindungsgemäß ausgebildete Toilettensitzfixierelemente, besonders bevorzugt ausgebildet als Befestigungsbolzen zur Befestigung des WC-Sitzes an dem WC-Körper eingesetzt. Diese Toilettensitzfixierelemente werden üblicherweise in einem Abstand von etwa 16 bis 20 cm voneinander beabstandet in der horizontalen Fläche im Befestigungsbereich am hinteren Ende des WC-Körpers in entsprechenden Befestigungsöffnungen angeordnet.

Eine stabilere Ausführungsform sieht zwei über ein Verbindungselement unter Abstand miteinander verbundene Toilettensitzfixierelemente oder eine einteilige Befestigungsleiste mit zwei beabstandeten Toilettensitzfixierelementen vor.

Der Spaltfüller kann in die Befüllungsöffnung entweder mittels eines aufsetzbaren Adapters oder mittels einer Spritze oder dergleichen eingebracht werden.

Der WC-Körper besteht vorzugsweise aus einem mineralischen Stoff mit einer außenseitigen Glasur, welche bei dem Brennvorgang zu einer Keramik aushärten. Grundsätzlich ist die Erfindung aber bei WC-Körpern aus einem beliebigen Material verwendbar, z.B. bei einem Stahlkörper oder einem Kunststoff, z.B. Corian, einem Mineralwerkstoff mit dem sich beliebige Geometrien gestalten lassen. Der üblicherweise einen Deckel und einen Sitzring umfassende WC-Sitz besteht vorzugsweise aus einem Duroplast.

Die Erfindung ist insofern besonders geeignet für moderne Design-Keramiken, die zur Bildung eines harmonisch abgestimmten WC-Körpers mit möglichst umlaufend geschlossener Außenwand, weshalb der seitliche Zugang zu den Toilettensitzfixierelementen bei diesen aber besonders schwierig ist.

Es liegt insofern auch im Rahmen der Erfindung einen Einbausatz umfassend einen WC-Sitz, ein oder mehrere Toilettensitzfixierelemente sowie einen Spaltfüller vorzusehen, die als solcher für die Erstausstattung oder Nachrüstung am Markt vertrieben werden kann.

Mehrere bevorzugte Ausführungsbeispiele der Erfindung sind in den Zeichnungen beispielhaft und nicht beschränkend dargestellt und werden im Folgenden näher beschrieben. Es zeigen:

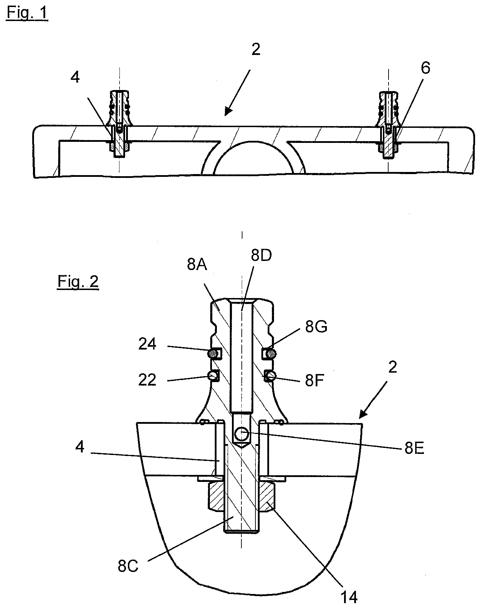

- Fig. 1:: einen Querschnitt durch das hintere Befestigungsende einer WC-Keramik;
- Fig. 2:: einen perspektivischen Querschnitt einer ersten Ausführungsform eines in die WC-Keramik eingesetzten Befestigungsbolzen;

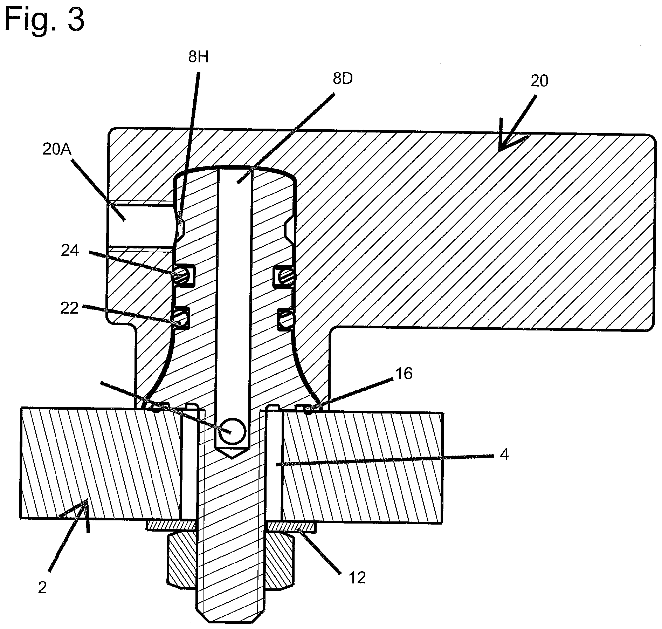

- Fig. 3:: ein frontales Schnittbild des an der WC-Keramik angebrachten Befestigungsbolzens gemäß Figur 2 mit aufgesetztem WC-Sitz;
- Fig. 4:: einen perspektivischen Querschnitt einer alternativen Ausführungsform des erfindungsgemäßen Befestigungsbolzens;
- Fig. 5:: einen Querschnitt des auf den Befestigungsbolzen gemäß Figur 4 aufgebrachten Toilettensitzes in der vergrößerten Detailansicht.
- Fig. 6:: einen Querschnitt einer dritten Ausführungsform eines Befestigungsbolzens;
- Fig. 7:: einen Querschnitt einer vierten Ausführungsform einer Befestigungsbuchse zur drehfixierten Aufnahme eines Befestigungsbolzens; und
- Fig. 8:: eine Draufsicht einer Sitzschablone;
- Fig. 9:: eine Rückenansicht einer Designkeramik mit eingesetzten Befestigungsbolzen vor dem Aufsetzen der Sitzschablone vor der Vorfixierung; und
- Fig. 10:: die Ansicht gemäß Fig. 9 mit aufgesetzter Sitzschablone.

Gleiche oder gleichwirkende Teile sind mit denselben Bezugszeichen versehen.

In der folgenden ausführlichen Beschreibungen wird auf die beigefügten Zeichnungen Bezug genommen, die Teil dieser bilden und in denen zur Veranschaulichung spezifische Ausführungsformen gezeigt sind, in der die Erfindung ausgeübt werden kann. In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den nachfolgenden Figuren sind im Wesentlichen maßstäblich. Zur Veranschaulichung von Details sind jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Die in ihrer Gesamtheit in den Figuren nur mit dem Befestigungsende für den WC-Sitz gezeigte WC-Keramik 2 umfasst am hinteren Ende, also zwischen einem Spülraum bzw. WC-Raum und einer das WC tragenden Wand ein sich in Einbaulage horizontal erstreckendes Befestigungsende, mit welchem die WC-Keramik 2 an der Wand bzw. Vorwand über Befestigungsbolzen in bekannter Weise befestigt ist. Der WC-Keramik wird über eine Spülwasserleitung Spülwasser für die Durchführung der Spülung zugeführt und am unteren Ende ist diese üblicherweise mit einem Siphon sowie einem Ablaufanschluss versehen, der von hinten in die WC-Keramik mündet und durch welche mit Fäkalien verunreinigtes Wasser bzw. Spülwasser aus dem Spülraum im Rahmen einer Spülung aus dem Spülraum ausgespült werden kann.

An dem in Einbaulage die obere Horizontalebene des WC-Körpers definierenden Befestigungsende umfasst die WC-Keramik 2 zwei vorliegend durchgehende und zueinander in einem Abstand von ca. 16 bis 20 cm beabstandete Befestigungsöffnung 4, 6 mit einem Innendurchmesser von 1 bis 1,5, vorzugsweise 1,2 cm, in welche in den Figuren dargestellte Befestigungsbolzen 8, 10 einsetzbar sind.

Jeder Befestigungsbolzen 8, 10 ist ausgebildet als längliches, stiftförmiges Element, welches vorzugsweise aus Stahl gefertigt ist. Am oberen Ende ist jeder Befestigungsbolzen 8, 10 ausgebildet zur Befestigung an einem WC-Sitz, vorliegend als zylindrischer Standbolzen 8A, welcher sich vom oberen Ende bis etwa zu der Mitte des Befestigungsbolzens 8 unter Verbreiterung des Außendurchmessers erstreckt, so dass der Befestigungsbolzen einen Absatz oder umlaufenden Auflageflansch 8B bildet, welcher in Einbaulage oberseitig mit seiner Unterseite auf der oberen Horizontalebene der WC-Keramik 2 aufsitzt, also in jedem Fall größer ist als der Durchmesser der Befestigungsöffnungen 4, 6, so dass dieser Auflageflansch 8B eine dichtende Auflage auf der Oberseite der WC-Keramik 2 bildet. An der in Einbaulage nach unten gerichteten Auflagefläche ist der ringförmige Auflageflansch 8B mit zwei Ringnuten versehen, in welche zur besseren Abdichtung O-Ringe 16 einetzbar sind. Von dem Auflageflansch 8B nach unten erstreckt sich weiterhin einstückig von der Mitte des Befestigungsbolzens 8 ein zylindrischer Gewindestift 8C, auf dessen unterem Ende in Einbaulage eine Unterlegscheibe 12, vorzugsweise aus Metall und eine Befestigungsmutter 14 zur Vorfixierung an der WC-Keramik 2 aufsetzbar ist.

Diese Vorfixierung realisiert bereits die gewünschte Ausrichtung der Befestigungsbolzen 8, 10 in der gewünschten Sollposition, angepasst an die Geometrie und die Ausrichtung des Sitzkonturelements, welches den äußeren Abmessungen des WC-Sitzes in Einbaulage angepasst an die Geometrie der konkreten WC-Keramik entspricht.

Nach dieser Vorfixierung erfolgt die Endfixierung durch Einbringen des Spaltfüllers über den Befüllungskanal 8D in einen möglicherweise noch vorhandenen Hohl- bzw. Ringraum zwischen der Befestigungsöffnung 4, 6 und dem in diesem in der Sollposition angeordneten Gewindestift 8C bzw. Gewindebolzen 18.

Hierfür umfasst der Befestigungsbolzen 8 eine sich vom oberen Ende in der Mitte des Standbolzens 8A bis etwa in die Mitte des Gewindestifts 8C erstreckenden Befüllungskanal 8D mit einem am unteren Ende sich quer zu diesem 8D erstreckenden Austrittkanal 8E, durch welches mittels eines auf den Befestigungsbolzen 8 oberseitig auf setzbaren Adapters der noch fließfähige Spaltfüller in den Ringspalt einbringbar ist. Dieser somit den Ringspalt vollständig ausfüllende Spaltfüller härtet sodann aus, was vorzugsweise unter Raumtemperatur erfolgt, bei anderen Spaltfüllern aber auch erst unter weiterer Wärmeeinwirkung erfolgt und den Befestigungsbolzen positionsgenau permanent fixiert.

Nach der Endfixierung wird der WC-Sitz 20 auf die Standbolzen 8A der Befestigungsbolzen 8,10 aufgesetzt. Hierzu weist der WC-Sitz 20 an die Geometrie der Standbolzen 8A angepasste Einsatzöffnungen auf, welche also in Einbaulage spielfrei mit dem Standbolzen zusammenwirken. Zur besseren Abdichtung und Fixierung umfasst der Standbolzen zwei axial voneinander beabstandete Nuten 8F, 8G, in welche O-Ringe 8G, 8I eingesetzt sind. Das unverlierbare Befestigen des WC-Sitzes 20 an dem Standbolzen 8A erfolgt durch Eindrehen einer Madenschraube seitlich in eine Fixieröffnung 20A an dem WC-Sitz 20, die sich in Einbaulage in eine oberseitigen Vertiefung 8H an dem Standbolzen 8A eingreift.

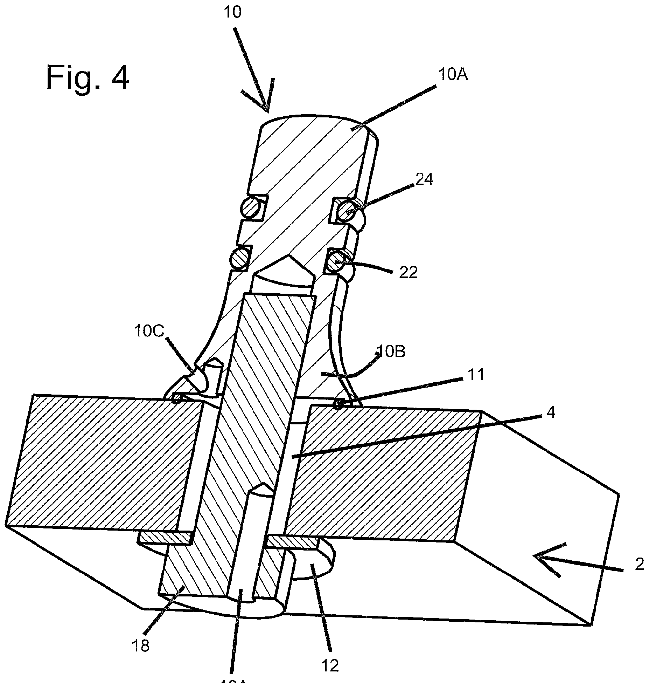

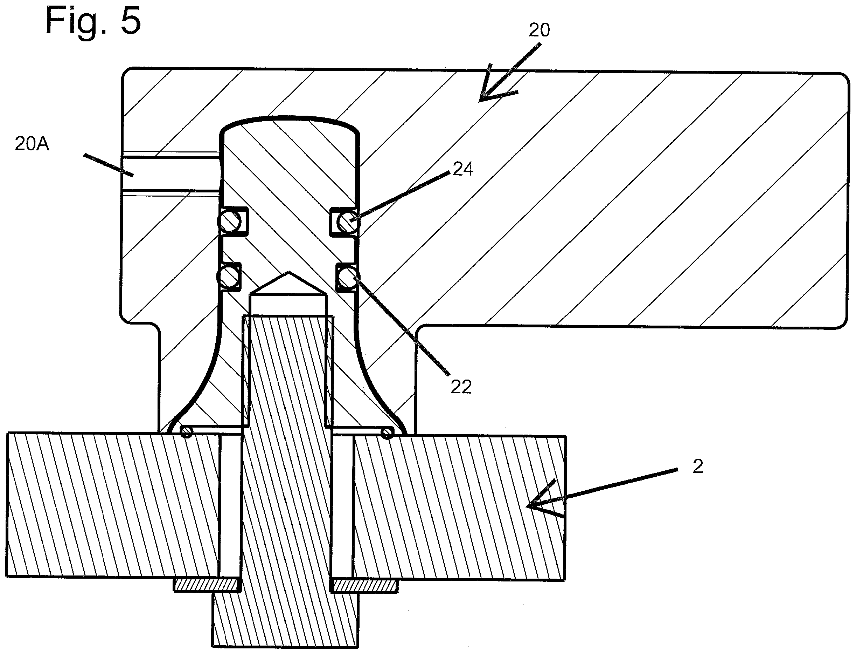

Die Ausführungsform des Befestigungsbolzens 10 in den Figuren 4 und 5 unterscheidet sich von der zuvor beschriebenen durch die zweiteilige Ausbildung mit einem in Einbaulage oberen Standbolzen 10A und einem von unten in diesen eingeschraubten Gewindebolzen 18. Für die Vorfixierung wird bei dieser Ausführungsform zunächst der Gewindebolzen 18 von unten unter Verwendung einer Unterlegscheibe 12 in das korrespondierende Innengewinde an der Innenseite des Standbolzens 10A eingedreht.

Ferner erfolgt bei dieser Ausführungsform das Einbringen des Spaltfüllers zur Endfixierung auch über den Gewindebolzen 10K, wozu dieser eine sich in Längsrichtung erstreckende Befüllungsöffnung mit einem sich anschließenden Befüllungskanal 18A zum Einbringen des Spaltfüllers und eine sich zu dieser quer erstreckende Austrittsöffnung 18B aufweist, über welche der Spaltfüller somit in den Ringspalt zu dessen vollständiger Befüllung eindringt.

Bei der Ausführungsform in Figuren 4 und 5 ist in dem grundsätzlich ebenfalls zylindrischen Standbolzen mit sich nach unten verbreitenden Auflageflansch ein Lüftungskanal 10C für die bei der Befüllung austretende Luft vorgesehen kann. Auch bei dieser Ausführungsform ist zur besseren Abdichtung ein O-Ring 16 an der Unterseite des Auflageflansches 10B eingesetzt.

Die Befestigung des WC Sitzes 20 erfolgt in der zuvor beschriebenen Weise durch Aufsetzen auf die Oberseite der Standbolzen 10A und seitliches Eindrehen von Madenschrauben in entsprechender Fixieröffnungen an dem WC Sitz 20.

Bei einer alternativen Ausführungsform kann die Befüllung mit dem Spaltfüller für die Endfixierung auch über eine Befüllungsöffnung in der Unterlegscheibe 12 erfolgen.

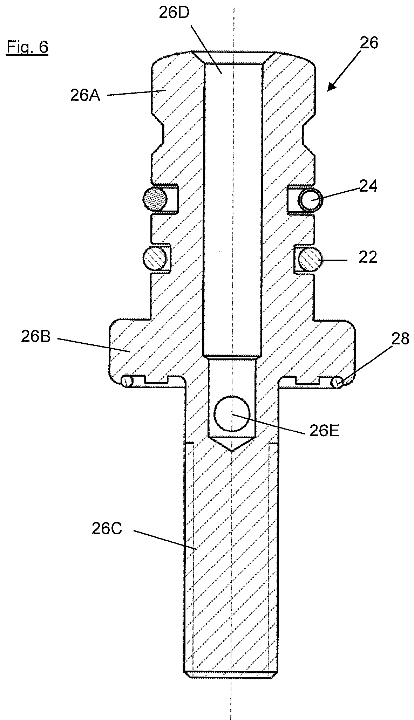

Der in Figur 6 dargestellte Befestigungsbolzen 26 umfasst einen oberen zylindrischen Standbolzenabschnitt 26A, dessen Außendurchmesser von vorliegend ca. 15mm sich etwa in der Mitte im rechten Winkel radial nach außen zur Bildung eines Auflageflansches 26B mit einer um das 1,5 bis 2-Fache des Außendurchmessers des Standbolzenabschnitts 26A verbreitert, und an den sich dann mit etwas geringerem Durchmesser als der Standbolzenabschnitt 26A ein Gewindeabschnitt 26C mit einem Außengewinde (M8) anschließt. Eine Befüllungskanal 26D erstreckt sich mittig durch den Standbolzenabschnitt 26A, in den Bereich des Auflageflansches 26B bis zu einer Austrittsöffnung 26E am oberen Ende des Gewindeabschnitts 26C. Quer erstreckend zum Befüllungskanal 26D tritt die Austrittsöffnungen 26E. An der Unterseite des Auflageflansches 26B sind wiederum zwei konzentrische Nuten vorgesehen, von denen in der äußeren Nut ein O-Ring 28 zur dichtenden Auflage auf der Oberseite der WC-Keramik um die Befestigungsöffnung 4,6 herum angeordnet ist. Hinsichtlich der restlichen Ausgestaltung unterscheidet sich die Ausführungsform des Befestigungsbolzen nicht von dem zuvor beschriebenen, so dass auf die weitere Beschreibung oben Bezug genommen wird. Jedenfalls sind an dem Standbolzenabschnitt 26A aber auch zwei übereinander angeordnete Nuten zur Aufnahme von O-Ringen 22, 24, womit eine spielfreie und dichtende Befestigung des WC-Sitzes an dem Befestigungsbolzen 26 durch dessen einfaches Aufsetzen bzw. Aufschieben möglich ist.

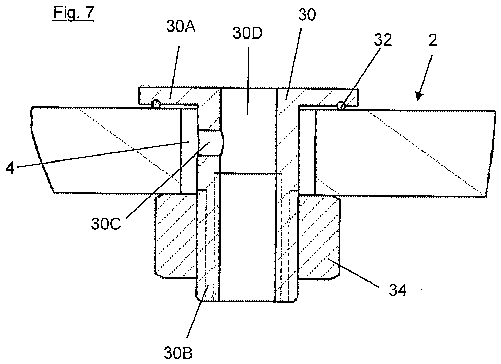

Figur 7 zeigt einen vergrößerten Querschnitt durch ein als Befestigungsbuchse 30 ausgebildetes Toilettensitzfixierelement eingesetzt in eine Befestigungsöffnung 4, des hinteren, horizontalen Befestigungsabschnitts einer WC-Keramik 2. Diese Ausführungsform umfasst eine hohlzylindrische Befestigungsbuchse 30 mit einem an dem Oberende radial um etwas das Doppelte über den Nenndurchmesser der Befestigungsbuchse 30 radial umlaufenden, nach außen ragenden Auflagebund 30A, der an seiner unteren Auflageseite eine Nut mit einem eingesetzten O-Rings 32 umfasst. Deutlich ist erkennbar, dass der Auflagebund dimensionsmäßig so ausgebildet ist, dass bei jeder Anordnung der Befestigungsbuchse 30 innerhalb der Befestigungsöffnung 4, 6, also auch bei einer Anlage an den Seiten der Befestigungsöffnung 4 in jedem Fall der Auflagebund 30A das Befestigungsöffnung 4 beidseitig vollständig abdeckend auf der WC-Keramik 2 aufliegt.

Am unteren Ende ist die Befestigungsbuchse 30 mit einem Außengewinde 30B versehen, auf welches eine Mutter 34 von der Unterseite der WC-Keramik 2 aufschraubbar ist. In dem Abschnitt oberhalb des Außengewindes 30B und unterhalb des Auflagebunds 30A ist die zylindrische Mantelfläche der Befestigungsbuchse 30 von einer Austrittsöffnung 30C durchdrungen, über welche der Spaltfüller bei der Endfixierung aus der Befestigungsbuchse 30 in den umgebenden Freiraum zwischen der Befestigungsbuchse 30 und der Befestigungsöffnung 4 eintreten kann. Ein nicht dargestellter Standbolzen kann in die mittige Einsatzöffnung 30D der Befestigungsbuchse 30 eingesetzt werden. Die Einsatzöffnung 30D der Befestigungsbuchse und das Befestigungsende des Standbolzens sind komplementär zueinander ausgebildet, z.B. komplementär zylindrisch oder auch komplementär kantig zur Vermeidung einer Relativbewegung der Bauteile in Einbaulage.

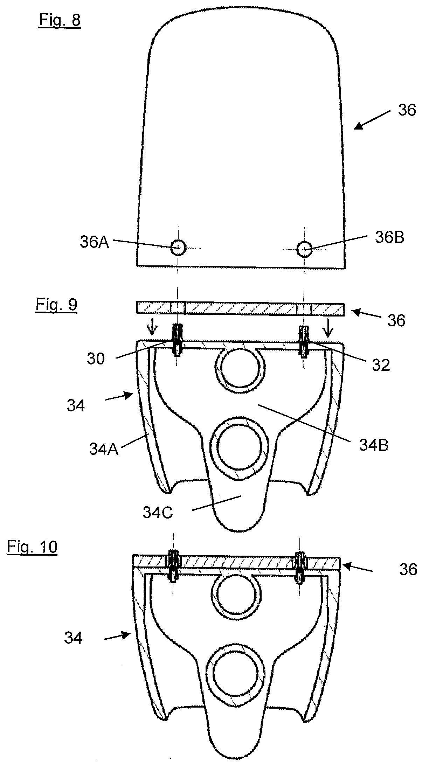

Anhand der Figuren 8 bis 10 wird nun die positionsgenau Ausrichtung von zwei Befestigungsbolzen 30, 32 an dem rückseitigen horizontalen Verbindungsabschnitt einer Designkeramik 34 beschrieben, die eine umseitig geschlossene Schürze 34A zur umschließenden Verkleidung des Spülraums 34B aufweist, die sich von der oberen Sitzfläche nahezu vollständig bis zum unteren Ende des unteren Siphons 34C erstreckt. Das in dieser Ausführungsform als Deckelschablone 36 ausgebildete Positionierungsmittel bildet den an die Designkeramik 34 angepassten Toilettensitz ab und weist als Positioniermittel einen den oberen Rand der Sitzfläche der Designkeramik übergreifenden und sich in Betrachtungsrichtung in der Ebene der Abbildung erstreckenden Positionierrand auf.

Am hinteren Ende umfasst die Deckelschablone 36 zwei im Abstand von 20 bis 22 cm zueinander beabstandete Positionierlöcher 36A, 36B auf, welche oberen Standbolzen der Befestigungsbolzen 30, 32 spielfrei aufnehmen. Sodann werden die Befestigungsbolzen 30, 32 durch Anziehen von Muttern auf die unterseitigen Gewinde der Befestigungsbolzen 30, 32 angezogen und somit vorfixiert. Schließlich wird der Spaltfüller eingebracht zum Verfüllen möglicher Zwischenräume zwischen den Befestigungsbolzen 30, 32 und der Befestigungsöffnungen in dem Verbindungsabschnitt der Designkeramik 34.

Selbstverständlich ist die Erfindung nicht auf die Verwendung im Zusammenhang mit einer Designkeramik beschränkt, sondern kann für jede beliebige Keramik verwendet werden.

Der Gegenstand der vorliegenden Erfindung ergibt sich nicht nur aus dem Gegenstand der einzelnen Patentansprüche, sondern aus der Kombination der einzelnen Patentansprüche untereinander, soweit dieser unter den Schutzbereich der beigefügten Ansprüche fällt.

### Bezugszeichenliste

- 2: WC-Keramik
- 4: Befestigungsöffnung
- 6: Befestigungsöffnung
- 8: Befestigungsbolzen
- 8A: Standbolzen
- 8B: Auflageflansch
- 8C: Gewindestift
- 8D: Befüllungskanal
- 8E: Austrittsöffnung
- 8F: Nut
- 8G: Nut
- 8H: Vertiefung
- 10: Befestigungsbolzen
- 10A: Standbolzen
- 10B: Auflageflansch
- 10C: Lüftungskanal
- 11: O-Ring
- 12: Unterlegscheibe
- 14: Befestigungsmutter
- 16: O-Ring
- 18: Gewindebolzen
- 18A: Befüllungskanal
- 18B: Austrittsöffnung
- 20: WC-Sitz
- 20A: Fixieröffnung
- 22: O-Ring
- 24: O-Ring
- 26: Befestigungsbolzen
- 26A: Standbolzenabschnitt
- 26B: Auflageflansch
- 26C: Gewindeabschnitt
- 26D: Befüllungskanal
- 26E: Austrittöffnung
- 28: O-Ring
- 30: Befestigungsbuchse
- 30A: Auflagebund
- 30B: Außengewinde
- 30C: Austrittöffnung
- 30D: Einstatzöffnung
- 32: O-Ring
- 34: Mutter
- 30: Befestigungsbolzen
- 32: Befestigungsbolzen
- 34: Designkeramik
- 34A: Schürze
- 34B: Spülraum
- 34C: Siphon
- 36: Deckelschablone
- 36A: Positionierloch
- 36B: Positionierloch

## Patentansprüche

1. Verfahren zur dauerhaften und positionsfesten Befestigung von zumindest einem Toilettensitzfixierelement zum Ermöglichen einer dauerhaften und positionsfesten Befestigung eines WC-Sitzes (20) an einem WC-Körper, umfassend die Verfahrensschritte:
• Ausrichten einer Positionierhilfe im Verhältnis zu dem WC-Körper;
• Ausrichten des mindestens einen Toilettensitzfixierelements (8, 10) in mindestens einer Befestigungsöffnung des WC-Körpers anhand der Positionierhilfe, wobei das Toilettensitzfixierelement (8, 10) mit einem ersten Abschnitt in die Befestigungsöffnung eingesetzt wird und über seine Erstreckung hinweg, mit der es sich in der Befestigungsöffnung erstreckt, einen Außendurchmesser aufweist, der kleiner ist als die Befestigungsöffnung zum Ermöglichen eines Ausgleichs von sich bei der Herstellung des WC-Körpers ergebenden Toleranzen durch das Ausrichten des Toilettensitzfixierelements (8, 10) in der Befestigungsöffnung anhand der Positionierhilfe;
• positionsgenaues Vorfixieren des mindestens einen Toilettensitzfixierelements mit einem Befestigungsmittel in einer Sollposition; und
• unverrückbares, positionsfestes und dauerhaftes Endfixieren des Toilettensitzfixierelements durch Verfüllen eines Freiraums zwischen dem Toilettensitzfixierelement und der Wandung der Befestigungsöffnung mit einem dauerhaft aushärtenden Spaltfüller.

2. Verfahren nach Anspruch 1, **DADURCH GEKENNZEICHNET, dass** zunächst das Ausrichten, dann das Vorfixieren und schließlich das Endfixieren erfolgen.

3. Verfahren nach Anspruch 1 oder 2, **DADURCH GEKENNZEICHNET, dass** als Positionierhilfe ein an dem WC-Körper ausrichtbares Sitzkonturelement mit mindestens einem Positionierloch für die Ausrichtung des Toilettensitzfixierelements in der Sollposition verwendet wird.

4. Verfahren nach Anspruch 3, **dadurch gekennzeichnet, dass** das Sitzkonturelement auf den WC-Körper aufgesetzt wird zur Realisierung einer gleichmäßigen, an die Geometrie des WC-Körpers angepassten Ausrichtung.

5. Verfahren nach einem der vorhergehenden Verfahrensansprüche, **DADURCH GEKENNZEICHNET, dass** das Endfixieren bei Raumtemperatur erfolgt.

6. Verfahren nach einem der Verfahrensansprüche 1 bis 4, **DADURCH GEKENNZEICHNET, dass** das Endfixieren unter Erwärmung erfolgt.

7. Verfahren nach einem der vorhergehenden Verfahrensansprüche, **DADURCH GEKENNZEICHNET, dass** Füllmaterial nicht elastisch ist.

8. Nach dem Verfahren gemäß Anspruch 1 hergestellte, WC-Körper und Toilettensitzfixierelement aufweisende Einheit, deren WC-Körper mit wenigstens einer Befestigungsöffnung (4, 6) für die Aufnahme eines Toilettensitzfixierelementes (8, 10) versehen ist, **DADURCH GEKENNZEICHNET, dass** das Toilettensitzfixierelement (8, 10) mit einem ersten Abschnitt in die Befestigungsöffnung eingesetzt ist und über seine Erstreckung hinweg, mit der es sich in der Befestigungsöffnung erstreckt, einen Außendurchmesser aufweist, der kleiner ist als die Befestigungsöffnung, und dass der Freiraum zwischen Toilettensitzfixierelement und der Wandung der Befestigungsöffnung durch ein aushärtendes Füllmaterial ausgefüllt ist.

9. Einheit nach Anspruch 8, dessen
Toilettensitzfixierelement (8, 10) mit einem Auflager zum Aufsetzen auf eine Befestigungsöffnung (4, 6) umgebende Auflagefläche des WC-Körpers, einem in Einbaulage von dem Auflager nach oben erstreckenden Standbolzen (8A) zur Fixierung des WC-Sitzes (20) und einem von dem Auflager nach unten erstreckenden Befestigungselement zur Befestigung an dem WC-Körper, **DADURCH GEKENNZEICHNET, DASS** dieses einen Befüllungsöffnung zum Einbringen eines fließfähigen, dauerhaft aushärtenden Spaltfüllers in einen in Einbaulage zwischen der Befestigungsöffnung (6, 8) und dem Befestigungselement gebildeten Freiraum aufweist zur Realisierung einer positionsgenauen und unverrückbaren Befestigung.

10. Einheit nach Anspruch 9, **DADURCH GEKENNZEICHNET, dass** die Befüllungsöffnung des Toilettensitzfixierelements (8, 10) Bestandteil eines sich durch einen obere mehre Bestandteile des Toilettensitzfixerelements erstreckenden Befüllungskanals (8D, 18A, 26D)ist.

11. Einheit nach Anspruch 9, **DADURCH GEKENNZEICHNET, dass** das Toilettensitzfixierelement (8, 10) einstückig ausgebildet ist.

12. Einheit nach Anspruch 9, **DADURCH GEKENNZEICHNET, dass** das Toilettensitzfixierelement (8, 10) mehrteilig ausgebildet ist.

13. Einheit nach Anspruch 12, **DADURCH GEKENNZEICHNET, dass** zwischen den einzelnen Teilen Mittel zur Vermeidung einer Relativbewegung ausgebildet sind.

14. Einheit nach einem der vorhergehenden diese betreffenden Ansprüche, **DADURCH GEKENNZEICHNET, dass** der Befüllungskanal in dem Standbolzen (8A) und/oder dem Befestigungselement ausgebildet ist.

15. Einheit nach einem der Ansprüche 9 bis 14, **DADURCH GEKENNZEICHNET, dass** der Befüllungskanal des Toilettensitzfixierelements (8, 10) in einer zur Befestigung verwendeten Unterlegscheibe (12) oder einem anderen Fixierhilfsmittel ausgebildet ist.

16. Einheit nach einem der vorhergehenden diese betreffenden Ansprüche, **DADURCH GEKENNZEICHNET, dass** das Auflager des Toilettensitzfixierelements (8, 10) die Befestigungsöffnung (4, 6) in jeder Ausrichtung in Einbaulage vollständig verdeckend ausgebildet ist.

17. Einheit nach Anspruch 16, **DADURCH GEKENNZEICHNET, dass** das Auflager einen radial umlaufenden, über einen Nenndurchmesser der Befestigungsöffnung (4, 6) in Einbaulage hinausragenden Auflageflansch oder Auflagebund umfasst.

18. Einheit nach einem der vorhergehenden diese betreffenden Ansprüche, **DADURCH GEKENNZEICHNET, dass** das Auflager des Toilettensitzfixierelements (8, 10)an einer in die Befestigungsöffnung (4,6) einsetzbaren Befestigungsbuchse (30) vorgesehen ist, und dass der Standbolzen in die Befestigungsbuchse (30) einsetzbar ist.

19. Einheit nach einem der vorgehenden diese betreffenden Ansprüche, **DADURCH GEKENNZEICHNET, dass** zwischen den einzelnen Teilen des Toilettenfixierelements (8, 10) Mittel zur Vermeidung einer Relativbewegung, insbesondere Drehverhinderungsmittel in Einbaulage ausgebildet sind.

## Claims

1. Method of permanently and positionally securing at least one toilet seat fixing element to enable a toilet seat (20) to be permanently and positionally fixed to a toilet body, comprising the steps of:
• aligning a positioning aid in relation to the toilet body;
• aligning the at least one toilet seat fixing element (8, 10) in at least one mounting hole of the toilet body by means of the positioning aid, wherein the toilet seat fixing element (8, 10) is inserted into the mounting hole with a first portion and has an outer diameter over its entire extension, with which it extends in the mounting hole, which is smaller than the mounting hole, for enabling compensation of tolerances arising during the manufacture of the toilet body by aligning the toilet seat fixing element (8, 10) in the mounting hole by means of the positioning aid;
• positionally accurate pre-fixing of the at least one toilet seat fixing element with a fixing means in a desired position; and
• immovable, positionally fixed and permanent final fixing of the toilet seat fixing element by filling a free space between the toilet seat fixing element and the wall of the mounting hole with a permanently curing gap filler.

2. Method according to claim 1, **CHARACTERIZED IN THAT** first the aligning, then the pre-fixing and finally the final fixing are performed.

3. Method according to claim 1 or 2, **CHARACTERIZED IN THAT** as positioning aid, a seat contour element adapted to be aligned on the toilet body with at least one positioning hole is used for the alignment of the toilet seat fixing element in the desired position.

4. Method according to claim 3, **CHARACTERIZED IN THAT** the seat contour element is placed on the toilet body for making a uniform alignment adapted to the geometry of the WC body.

5. Method according to any one of the preceding method claims, **CHARACTERIZED IN THAT** the final fixing is carried out at room temperature.

6. Method according to any one of the method claims 1 to 4, **CHARACTERIZED IN THAT** the final fixing is carried out under heating.

7. Method according to any one of the preceding method claims, **CHARACTERIZED IN THAT** the filling material is not elastic.

8. Assembly manufactured according to the method of claim 1, comprising a toilet body and a toilet seat fixing element, the toilet body of which is provided with at least one mounting hole (4, 6) for receiving a toilet seat fixing element (8, 10), **CHARACTERIZED IN THAT** the toilet seat fixing element (8, 10) is inserted with a first portion into the mounting hole and has an outer diameter over its extension, with which it extends in the mounting hole, which is smaller than the mounting hole, and **in that** the free space between the toilet seat fixing element and the wall of the mounting hole is filled by a curing filling material.

9. Assembly according to claim 8, the toilet seat fixing element (8, 10) of which comprises a support for placing on a supporting surface of the toilet body surrounding the mounting hole (4, 6), a stay bolt (8A) extending upwardly from the support in the installed position for fixing the toilet seat (20), and a fixing element extending downwardly from the support for fixing to the toilet body, **CHARACTERIZED IN THAT** said fixing element has a filling opening for introducing a flowable, permanently curing gap filler into a free space formed in the installation position between the mounting hole (6, 8) and the fixing element for producing a positionally accurate and immovable fastening.

10. Assembly according to claim 9, **CHARACTERIZED IN THAT** the filling opening of the toilet seat fixing element (8, 10) is part of a filling channel (8D, 18A, 26D) extending through one or more components of the toilet seat fixing element.

11. Assembly according to claim 9, **CHARACTERIZED IN THAT** the toilet seat fixing element (8, 10) is integrally formed.

12. Assembly according to claim 9, **CHARACTERIZED IN THAT** the toilet seat fixing element (8, 10) is formed in multiple parts.

13. Assembly according to claim 12, **CHARACTERIZED IN THAT** means for preventing relative movement are formed between the individual parts.

14. Assembly according to any one of the preceding claims relating thereto, **CHARACTERIZED IN THAT** the filling channel is formed in the stay bolt (8A) and/or the fixingelement.

15. Assembly according to any one of claims 9 to 14, **CHARACTERIZED IN THAT** the filling channel of the toilet seat fixing element (8, 10) is formed in a washer (12) or other fixing aid used for fixing.

16. Assembly according to any of the preceding claims relating thereto, **CHARACTERIZED IN THAT** the support of the toilet seat fixing element (8, 10) is formed in such a way that it completely covers the mounting hole (4, 6) in any orientation in the installation position.

17. Assembly according to claim 16, **CHARACTERIZED IN THAT** the support comprises a radially circumferential support flange or support collar projecting beyond a nominal diameter of the mounting hole (4, 6) in the installed position.

18. Assembly according to one of the preceding claims relating thereto, **CHARACTERIZED IN THAT** the support of the toilet seat fixing element (8, 10) is provided on a fixing bush (30) insertable into the mounting hole (4, 6), and **in that** the stay bolt is insertable into the fixing bush (30).

19. Assembly according to any one of the preceding claims relating thereto, **CHARACTERIZED IN THAT** means are formed between the individual parts of the toilet fixing element (8, 10) for preventing relative movement, in particular rotationpreventing means, in the installed position.

## Revendications

1. Procédé de fixation permanente et fixe en position d'au moins un élément de fixation de siège de toilette pour permettre une fixation permanente et fixe en position d'un siège de toilettes (20) sur un corps de toilette, comprenant les étapes de procédé:
• alignement d'une aide au positionnement par rapport au corps de WC;
• alignement de l'au moins un élément de fixation de siège de toilette (8, 10) dans au moins une ouverture de fixation du corps de toilette au moyen de l'aide au positionnement, l'élément de fixation de siège de toilette (8, 10) étant inséré avec une première section dans l'ouverture de fixation et présentant tout au long de son étendue, avec laquelle il s'étend dans l'ouverture de fixation, un diamètre extérieur qui est plus petit que l'ouverture de fixation, pour permettre une compensation des tolérances résultant de la fabrication du corps de WC par l'alignement de l'élément de fixation de siège de toilette (8, 10) dans l'ouverture de fixation au moyen de l'aide au positionnement;
• pré-fixation en position précise de l'au moins un élément de fixation de siège de toilette avec un moyen de fixation dans une position de consigne; et
• fixation finale inamovible, fixe en position et durable de l'élément de fixation de siège de toilette par remplissage d'un espace libre entre l'élément de fixation de siège de toilette et la paroi de l'ouverture de fixation avec un produit de remplissage d'espace à durcissement permanent.

2. Procédé selon la revendication 1, **CARACTERISE EN CE QUE** l'on procède d'abord à l'alignement, puis à la pré-fixation et enfin à la fixation finale.

3. Procédé selon la revendication 1 ou 2, **CARACTERISE EN CE QUE** l'on utilise comme aide au positionnement un élément à contour de siège pouvant être aligné sur le corps de toilette et comportant au moins un trou de positionnement pour l'orientation de l'élément de fixation de siège de toilette dans la position de consigne.

4. Procédé selon la revendication 3, **CARACTERISE EN CE QUE** l'élément à contour de siège est placé sur le corps de toilette pour réaliser un alignement uniforme adapté à la géométrie du corps de toilette.

5. Procédé selon l'une des revendications de procédé précédentes, **CARACTERISE EN CE QUE** la fixation finale est effectuée à température ambiante.

6. Procédé selon l'une quelconque des revendications de procédé 1 à 4, **CARACTERISE EN CE QUE** la fixation finale est effectuée sous chauffage.

7. Procédé selon l'une quelconque des revendications de procédé précédentes, **CARACTERISE EN CE QUE** le matériau de remplissage n'est pas élastique.

8. Ensemble fabriqué selon le procédé de la revendication 1, comprenant un corps de toilette et un élément de fixation de siège de toilette, dont le corps de toilette est pourvu d'au moins une ouverture de fixation (4, 6) destinée à recevoir un élément de fixation de siège de toilette (8, 10), **CARACTERISEE EN CE QUE** l'élément de fixation de siège de toilette (8, 10) est inséré avec une première section dans l'ouverture de fixation et présente sur son étendue, avec laquelle il s'étend dans l'ouverture de fixation, un diamètre extérieur qui est plus petit que l'ouverture de fixation, et **en ce que** l'espace libre entre l'élément de fixation de siège de toilette et la paroi de l'ouverture de fixation est rempli d'un produit de remplissage d'espace à durcissement permanent.

9. Ensemble selon la revendication 8, dont l'élément de fixation de siège de toilette (8, 10) pourvu d'un appui pour la pose sur une surface d'appui du corps de toilette entourant une ouverture de fixation (4, 6), d'un goujon (8A) s'étendant en position de montage vers le haut à partir de l'appui, pour la fixation du siège de toilette (20), et d'un élément de fixation s'étendant vers le bas à partir de l'appui, pour la fixation sur le corps de toilette, **CARACTERISE EN CE QUE** celui-ci présente une ouverture de remplissage pour l'introduction d'un produit de remplissage de fente fluide et durcissant durablement dans un espace libre formé en position de montage entre l'ouverture de fixation (6, 8) et l'élément de fixation, pour réaliser une fixation précise en position et inamovible.

10. Ensemble selon la revendication 9, **CARACTERISEE EN CE QUE** l'ouverture de remplissage de l'élément de fixation de siège de toilette (8, 10) fait partie d'un canal de remplissage (8D, 18A, 26D) qui s'étend à travers un ou plusieurs composants de l'élément de fixation de siège de toilette.

11. Ensemble selon la revendication 9, **CARACTERISE EN CE QUE** l'élément de fixation de siège de toilette (8, 10) est formé d'une seule pièce.

12. Ensemble selon la revendication 9, **CARACTERISE EN CE QUE** l'élément de fixation de siège de toilette (8, 10) est formé en plusieurs parties.

13. Ensemble selon la revendication 12, **CARACTERISE EN CE QUE** des moyens sont formés entre les différentes parties pour éviter un mouvement relatif.

14. Ensemble selon l'une quelconque des revendications correspondantes précédentes, **CARACTERISE EN CE QUE** le canal de remplissage est formé dans le goujon (8A) et/ou l'élément de fixation.

15. Ensemble selon l'une quelconque des revendications 9 à 14, **CARACTERISE EN CE QUE** le canal de remplissage de l'élément de fixation de siège de toilette (8, 10) est formé dans une rondelle (12) ou un autre accessoire de fixation utilisé pour la fixation.

16. Ensemble selon l'une quelconque des revendications correspondantes précédentes, **CARACTERISE EN CE QUE** l'appui de l'élément de fixation de siège de toilette (8, 10) est conçu pour recouvrir complètement l'ouverture de fixation (4, 6) dans n'importe quelle orientation en position de montage.

17. Ensemble selon la revendication 16, **CARACTERISE EN CE QUE** le support comprend une bride d'appui ou un collet d'appui périphérique radial dépassant d'un diamètre nominal de l'ouverture de fixation (4, 6) en position de montage.

18. Ensemble selon l'une quelconque des revendications correspondantes précédentes, **CARACTERISE EN CE QUE** l'appui de l'élément de fixation de siège de toilette (8, 10) est prévu sur une douille de fixation (30) pouvant être insérée dans l'ouverture de fixation (4, 6) et **en ce que** le goujon peut être inséré dans la douille de fixation (30).

19. Ensemble selon l'une quelconque des revendications correspondantes précédentes, **CARACTERISE EN CE QUE** des moyens pour éviter un mouvement relatif, en particulier des moyens empêchant la rotation en position de montage, sont formés entre les différentes parties de l'élément de fixation de toilette (8, 10).
